# EUROPEAN PATENT SPECIFICATION

(11) **EP 0 387 471 B1**
(45) Date of publication and mention of the grant of the patent: **17.05.1995**
(21) Application number: 89730179.2
(22) Date of filing: 02.08.1989
(51) Int. Cl.: F16K 31/04

(54) **An electrically controlled cold and hot water mixer faucet**
Elektrisch betätigtes Kalt- und Warmwasserventil
Robinet mélangeur à eau froide et chaude commandé électriquement

(30) Priority: 14.03.1989 FI 891209
(43) Date of publication of application: 19.09.1990
(73) Proprietor: ORAS OY, 26101 Rauma (FI)
(72) Inventor: Nilsson, Pekka Waldemar, SF-26100 Rauma (FI); Määttänen, Ari Esa Juhani, SF-27100 Eurajoki (FI)
(74) Representative: UEXKÜLL & STOLBERG

(56) References cited:
- AT-B- 291 128
- DE-A- 2 619 477
- DE-B- 2 323 841
- FR-A- 1 588 229
- US-A- 3 415 278

## Description

The present invention relates to an electrically controlled cold and hot water mixer faucet according to the preamble of claim 1. Such a mixer faucet is known from DE-B2-2 323 841.

There are previously known electrically controlled faucets of this type, which may have either separate motors for the control valves for cold and for hot water, or one motor moving the control member. In the prior-art faucets, the motor or motors adjusting the mixing ratio are usually controlled in such a way that they move the control member into a position which is determined by the temperature selected, by means of the control knob, by the user at any given time.

Although it is, of course, possible to equip a faucet, in a manner known per se, with a stop knob protecting from high temperatures, it is possible that the temperature selected by the previous user does not please the next user.

DE-B2-23 23 841 discloses an electrically- operated cold and hot water mixer wherein only one motor and one control circuit for the motor is required, the driving shaft of the motor being connected to both the cold water valve and the hot water valve, so as to drive those valves always in opposite directions. After use, the mixer will remain in the position used.

The object of the present invention is therefore to provide an electrically controlled faucet in which the initial temperature is always independent of the previous user and the water temperature can, when necessary, be adjusted by the user upward or downward from the set initial value. Furthermore, the faucet is made such that the said initial temperature always sets automatically after use.

This object is achieved by an electrically controlled cold and hot water mixer faucet, in which the control member determining the mixing ratio is moved by an electric motor controlled over a motor control circuit, characterized in that the control of the motor is arranged to depend on the output signal of a photocell or the like, said output signal of the photocell controlling a switch via which alternatively an electric reference quantity, capable of being set, or an electric quantity adjusted manually by the user is fed to the motor control circuit, in such a manner that, when the photocell does not detect any movement or target in its detection field, the motor receives said electric reference quantity and adjusts into a position corresponding to a preselected temperature of the mixed flow, and if the photocell detects a user the motor receives said electric quantity adjusted manually by the user.

Preferably the arrangement is such that the adjusting of the motor into the said position takes place only with a period of delay after the previous user has left the detection field of the photocell.

The invention and its other features and advantages are described below in greater detail in the form of an example and with reference to the accompanying drawings, in which
Figure 1 depicts, partly as a cutaway, a thermostat faucet according to the invention, and
Figure 2 is a diagrammatic representation of the control circuitry of the control motor.

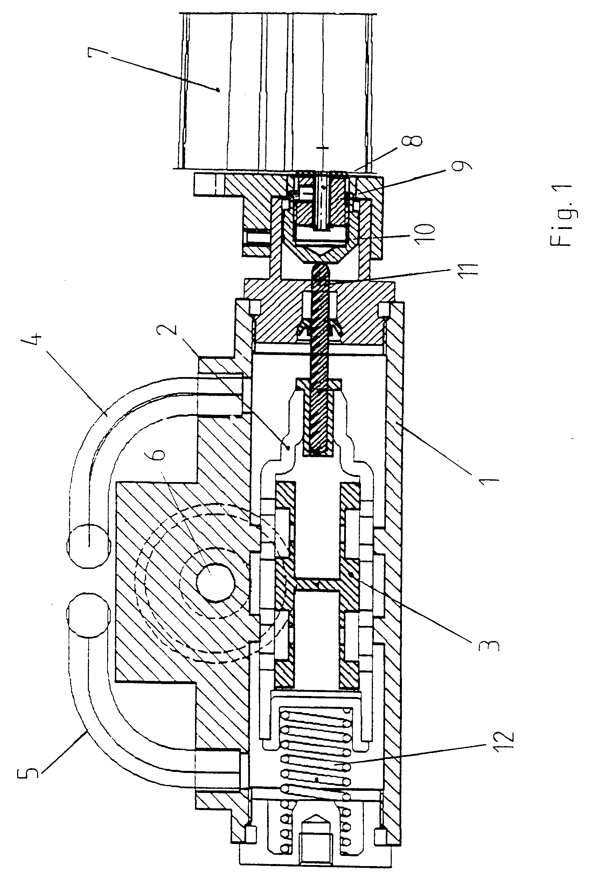

In Figure 1, reference numeral 1 indicates the faucet body, which in this case is substantially cylindrical. Inside the body there is installed a ratio valve 2, which controls the temperature of mixed water, its axial position determining the ratio between the inlet openings for cold water and hot water. Reference numeral 3 indicates the pressostat part, known per se, moving inside the ratio valve 2; the pressostat part rapidly levels out any changes of pressure.

Reference numerals 4 and 5 indicate respectively the inlet pipes for cold and hot water, and numeral 6 indicates the outlet pipe for mixed water.

The operation of a thermostat faucet such as this is quite well known previously and is not described here in greater detail.

The axial movement of the ratio valve 2 is controlled by means of an electric motor 7, as follows.

The output shaft 8 of the electric motor 7 works through a thread fit in conjunction with the sleeve 9 surrounding it.

The sleeve 9 is controlled in the faucet body by means of a slip fit in such a manner that the sleeve cannot rotate. Thus the rotation of the shaft 8 produces an axial movement of the sleeve 9. To the sleeve 9 there is correspondingly attached a cup-like part 10, which acts on a spindle 11, attached to the ratio valve 2. Thus the motor 7 can push the ratio valve to the left in the figure, whereas the movement of the ratio valve to the right is produced by a spring 12, which keeps the spindle 11 tight against the part 10.

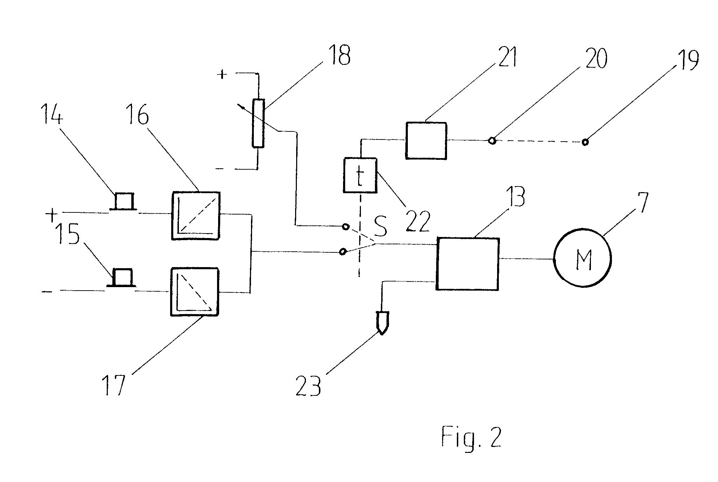

The motor 7 is controlled by a temperature sensor in the water-mixing space, as will be described below with reference to Figure 2.

Figure 2 thus depicts a block diagram of the electronics controlling the motor 7, the electronics being capable of being installed in the same casing as the motor.

The actual control circuit of the motor is indicated by reference numeral 13. The control circuit is affected as follows:

The user can, by pressing a button 14 or 15, raise or respectively lower the reference value fed to the control circuit 13. The circuits forming the reference value are indicated by reference numerals 16 and 17. The circuits 16 and 17 may be, for example, circuits which integrate the voltage value, in which case the circuit 16 linearly raises and the circuit 17 respectively linearly lowers the voltage value while the button 14, or respectively 15, is being pressed.

The reference value mentioned above is fed to the circuit 13 when the switch S is in the position shown in the figure. If the switch S is in the other position, indicated by a dashed line, the value fed to the control circuit 13 is the preselected reference value obtained from the circuit 18, for example, corresponding to a temperature of 38 °C. The operation of the switch S is controlled as follows.

In the area of the user there are installed an infrared source 19 and an infrared photocell 20 in such a manner that the photocell 20 detects whether there is a user blocking the ray of light. Thus the circuit 21 gives a binary, i.e. yes/no type, signal. If the photocell 20 does not detect a user, the circuit 21 draws the switch S into the upper position, and the selected reference value from the circuit 18 passes to the control circuit 13. At a point after the circuit 21 there is preferably installed a delay means 22, which delays the operation of the switch S for a selected time t, which may be, for example 25 s. This time is preferably also capable of being adjusted.

Reference numeral 23 indicates the above-mentioned temperature sensor installed in the water-mixing space, the control circuit 23 rotating the motor 7 until the temperature sensed by the temperature sensor 23 corresponds to the reference value received via the switch S of the control circuit 13.

## Claims

1. An electrically controlled cold and hot water mixer faucet, in which the control member (2) determining the mixing ratio is moved by an electric motor (7) controlled over a motor control circuit (13), **characterized** in that the control of the motor (7) is arranged to depend on the output signal of a photocell (20) or the like, said output signal of the photocell (20) controlling a switch (S) via which alternatively an electric reference quantity, capable of being set, or an electric quantity adjusted manually by the user is fed to the motor control circuit (13), in such a manner that, when the photocell (20) does not detect any movement or target in its detection field, the motor (7) receives said electric reference quantity and adjusts into a position corresponding to a preselected temperature of the mixed flow, and if the photocell (20) detects a user the motor (7) receives said electric quantity adjusted manually by the user.

2. A mixer faucet according to Claim 1, **characterized** in that between the photocell (20) and the control circuit (13) of the motor (7) there is installed a delay means (22) in such a manner that the adjusting of the motor into the preselected position takes place with a certain delay after the detection of no movement or target by the photocell (20).

3. A mixer faucet according to Claim 1, **characterized** in that the electric quantities are voltages.

4. A mixer faucet according to any of the above claims, **characterized** in that, for the purpose of adjustment by the user, in faucet is equipped with press-buttons (14, 15) by means of which the temperature is adjusted in either direction from the selected initial temperature.

5. A mixer faucet according to any of the above claims, **characterized** in that the preselected initial temperature is approximately 38°C.

## Patentansprüche

1. Elektrisch gesteuertes Kalt- und Warmwassermischventil, bei dem das Steuerbauteil (2), welches das Mischverhältnis bestimmt, durch einen Elektromotor (7) bewegt wird, der durch einen Motorsteuerschaltkreis (13) gesteuert wird, **dadurch gekennzeichnet**, daß die Steuerung des Motors (7) so ausgelegt ist, daß sie vom Ausgangssignal einer Fotozelle (20) oder ähnlichem abhängig ist, wobei das Ausgangssignal der Fotozelle (20) einen Schalter (S) steuert, über den entweder eine einstellbare elektrische Referenzgröße oder eine durch den Benutzer manuell einstellbare elektrische Größe so zum Motorsteuerschaltkreis (13) geführt wird, daß der Motor (7) die elektrische Referenzgröße erhält und sich in eine Position einstellt, die einer vorgewählten Temperatur des Mischdurchflusses entspricht, wenn die Fotozelle (20) keine Bewegung oder keinen Gegenstand in ihrem Erfassungsbereich erkennt, und daß der Motor (7) die durch den Benutzer manuell eingestellte elektrische Größe erhält, wenn die Fotozelle (20) einen Benutzer erfaßt.

2. Mischventil nach Anspruch 1, **dadurch gekennzeichnet**, daß zwischen der Fotozelle (20) und dem Steuerschaltkreis (13) des Motors (7) eine Verzögerungseinrichtung (22) so geschaltet ist, daß das Einstellen des Motors in die vorgewählte Position mit einer bestimmten Verzögerung stattfindet, nachdem durch die Fotozelle (20) keine Bewegung oder kein Gegenstand erfaßt wurde.

3. Mischventil nach Anspruch 1, **dadurch gekennzeichnet**, daß die elektrischen Größen Spannungen sind.

4. Mischventil nach einem der vorhergehenden Ansprüche, **dadurch gekennzeichnet**, daß das Mischventil mit Druckknöpfen (14, 15) versehen ist, welche durch den Benutzer eingestellt werden zu können, wodurch die Temperatur bezüglich der ausgewählten Anfangstemperatur in beide Richtungen verstellt werden kann.

5. Mischventil nach einem der vorhergehenden Ansprüche, **dadurch gekennzeichnet**, daß die vorgewählte Anfangstemperatur ungefähr 38°C beträgt.

## Revendications

1. Robinet mélangeur d'eau froide et chaude commandé électriquement, dans lequel l'élément de commande (2) déterminant le rapport du mélange est déplacé par un moteur électrique (7) commandé par un circuit de commande (13), caractérisé en ce que la commande du moteur (7) est conçue pour être sous la dépendance du signal de sortie d'une cellule photoélectrique (20) ou d'un dispositif analogue, ledit signal de sortie de la cellule photoélectrique (20) commandant un interrupteur (S) à travers lequel. une grandeur électrique de référence susceptible d'être prédéterminée, ou une grandeur électrique ajustée à la main par l'utilisateur sont appliquées alternativement au circuit (13) de commande du moteur, de manière telle que, si la cellule photoélectrique (20) ne détecte aucun mouvement ni aucune cible dans son champ de détection, le moteur (7) reçoive ladite grandeur électrique de référence et s'ajuste en une position correspondant à une température présélectionnée du flux mélangé, et que, si la cellule photoélectrique (20) détecte un utilisateur, le moteur (7) reçoive ladite grandeur électrique ajustée à la main, par cet utilisateur.

2. Robinet mélangeur selon la revendication 1, caractérisé en ce qu'il est prévu, entre la cellule photoélectrique (20) et le circuit de commande (13) du moteur (7), un moyen retardateur (22) tel que l'ajustage du moteur dans la position présélectionnée intervienne un certain temps après la détection de l'absence de cible ou de mouvement par la cellule photoélectrique (20).

3. Robinet mélangeur selon la revendication 1, caractérisé en ce que les grandeurs électriques sont des tensions.

4. Robinet mélangeur selon l'une quelconque des revendications précédentes, caractérisé en ce que, pour permettre un réglage par l'utilisateur, le robinet est pourvu de boutons-poussoirs (14, 15), au moyen desquels la température est ajustée dans une direction ou dans l'autre à partir de la température initiale présélectionnée.

5. Robinet mélangeur selon l'une quelconque des revendications précédentes, caractérisé en ce que la température initiale présélectionnée est approximativement de 38°C.
